# EUROPÄISCHE PATENTSCHRIFT

(11) **EP 3 059 061 B1**
(45) Veröffentlichungstag und Bekanntmachung des Hinweises auf die Patenterteilung: **19.07.2017**
(21) Anmeldenummer: 16156602.1
(22) Anmeldetag: 19.02.2016
(51) Int. Cl.: B29B 17/00, B29B 17/02, B65D 30/08, B65D 30/20, B09B 3/00

(54) **VERFAHREN ZUR WIEDERVERWERTUNG VON KUNSTSTOFF AUS EINEM FOLIENVERPACKUNGSBEUTEL**
METHOD FOR RECYCLING PLASTICS FROM A FILM PACKAGING BAG
PROCEDE DE RECYCLAGE DE PLASTIQUE A PARTIR D'UN SAC D'EMBALLAGE EN FILM

(30) Priorität: 20.02.2015 DE 102015102471
(43) Veröffentlichungstag der Anmeldung: 24.08.2016
(73) Patentinhaber: Mondi AG, 1030 Wien (AT)
(72) Erfinder: Perick, Matthias, 48683 Ahaus-Alstätte (DE)
(74) Vertreter: Lorenz, Bernd Ingo Thaddeus

(56) Entgegenhaltungen:
- EP-A1- 2 650 324
- WO-A1-2012/074371
- DE-U1- 29 704 147
- JP-A- 2013 096 556
- Jan Switten: "Standbeutel und Nachhaltigkeit", , 1. Januar 2014 (2014-01-01), XP055283534, Gefunden im Internet: URL:http://www.easyfairs.com/fileadmin/gro ups/13/EMPACK_PI_L_P_2015/Dokumente_PDF/Ja n_Switten_Switten_SARL.pdf [gefunden am 2016-06-24]

## Beschreibung

Die Erfindung betrifft ein Verfahren zur Wiederverwertung von Kunststoff aus einem Folienverpackungsbeutel, welcher einen von einer Beutelwand gebildeten Beutelkörper aufweist, wobei eine erste Oberfläche der Beutelwand von einer transparenten Außenfolie und eine zweite Oberfläche der Beutelwand von einer nicht perforierten Innenfolie gebildet sind und wobei zwischen der Außenfolie und der Innenfolie eine durch die transparente Außenfolie sichtbare Druckschicht angeordnet ist.

Folienverpackungsbeutel werden in der Praxis als Massenartikel eingesetzt, wobei der typische Aufbau solcher Folienverpackungsbeutel beispielsweise aus der EP 2 032 454 B1 sowie der EP 2 364 848 B1 bekannt ist.

Häufig ist als Material für die Beutelwand ein Kaschierverbund mit einer Innenfolie aus Polyethylen und einer Außenfolie auf der Basis von Polyethylenterephthalat (PET) oder biaxial orientiertem Polypropylen (BO-PP) vorgesehen, wobei eine Druckschicht bei einem solchen Kaschierverbund vor dem Verkleben der Innenfolie mit der Außenfolie innenliegend an der Kontaktfläche entweder auf die Außenfolie oder die Innenfolie aufgebracht wird und dann durch die transparente Außenfolie sichtbar ist.

Derartige Folienverpackungsbeutel zeichnen sich durch ein besonders hochwertiges Erscheinungsbild und gute Funktionseigenschaften aus. Allerdings ist aufgrund der Kaschierung der unterschiedlichen Polymermaterialien ein sortenreines Kunststoff-Recycling nicht möglich, weshalb entsprechende Folienverpackungsbeutel als Einweg-Artikel nach ihrer Benutzung allenfalls verbrannt und damit thermisch verwertet werden können.

Kunststoffabfälle, die durch ein Zerkleinern in jeweils sortenreine Partikel aufgeteilt werden können, werden in der Praxis häufig durch geeignete Sortiereinrichtungen voneinander getrennt und in Abhängigkeit ihres spezifischen Gewichtes bzw. ihrer Dichte aufgetrennt, wobei sowohl eine dynamische Aufteilung der Fraktionen in einer Strömung oder statische Verfahren in Betracht kommen.

Eine besondere einfache Trennung ist möglich, wenn jeweils für sich sortenreine Kunststoffpartikel in einen mit Wasser gefüllten Trenntank eingebracht werden, wobei dann Partikel, die leichter als Wasser sind, aufschwimmen und schwerere Partikel absinken. Entsprechende Einrichtungen werden demnach auch als Schwimm-Sink-Tank bezeichnet und können beispielsweise Polyethylenterephthalat (PET) oder Polyvinylchlorid (PVC) mit jeweils einer Dichte größer 1 g/cm³ von üblichen Polyolefinen wie Polyethylen (PE) oder Polypropylen (PP) trennen, die - zumindest in der üblichen Ausführung - eine Dichte von weniger als 1 g/cm³ aufweisen. Ein Verfahren und eine Vorrichtung zur Trennung von heterogenen Kunststoffen in homogene Fraktionen ist beispielsweise aus der EP 0 469 904 B1 bekannt.

Im Bereich von Folienverpackungsbeutel sind auch für bestimmte Anwendungsfälle, beispielsweise die Aufnahme von Streusalz, einfache sortenreine Ausführungen bekannt, die dann an ihrer Außenseite bedruckt werden. Entsprechende Ausführungen werden von einem Benutzer jedoch als wenig hochwertig angesehen und weisen in der Regel auch relativ schlechte Funktionseigenschaften auf. Ein von außen aufgebrachter Aufdruck ist nicht gegen Abrieb geschützt, so dass auch deshalb kein hochwertiges Erscheinungsbild erreicht werden kann.

Die Druckschriften DE 41 05 949 A1, DE 92 13 804 U1 und DE 93 01 234 U1 beschäftigen sich mit der Aufgabe, Schichtmaterialen aus verschiedenen Kunststoffen entweder durch Lösungsmittel oder mechanisch in seine Bestandteile aufzuteilen.

Weitere Verfahren zum Zerlegen und sortenreinen Trennen von Verbundstoffen aus Kunststoff sind aus der EP 801 163 B1, EP 1 036 596 B1, CH 696 295 A5 sowie EP 2 371 508 B1 bekannt, wobei jeweils ein erheblicher verfahrenstechnischer Aufwand notwendig ist, um durch eine physikalische und/oder chemische Verarbeitung der wiederzuverwertenden Produkte eine stoffliche Trennung zu erreichen.

Aus der DE 297 04 147 U1 ist ein Folienverpackungsbeutel für Schnitttabak bekannt, bei dem eine Einlage aus Papier zwischen Folienlagen aus Kunststoff eingelegt und nicht mit den Folienlagen verbunden ist.

Aus der JP 2013-096556 A ist ein Folienverpackungsbeutel bekannt, bei dem die Beutelwand von einer Außenfolie und einer Innenfolie gebildet ist und die Außenfolie und die Innenfolie nicht miteinander verbunden sind. Dadurch ist es möglich, Luft oder anderes Fluid zwischen die Außenfolie und die Innenfolie einzubringen, so dass der Folienverpackungsbeutel als besonders sichere, stoßgedämpfte Verpackung genutzt werden kann.

Aus der Veröffentlichung "Jan Switten: Standbeutel und Nachhaltigkeit", 1. Januar 2014, www.easyfairs.com/fileadmin/groups/13/EMPACK_PI_L_P 201 5/Dokumente_PDF/Jan_Switten_Switten_SARL.pdf ist ein Verfahren zur Wiederverwertung von Kunststoffen bekannt. Das Verfahren umfasst das Bereitstellen eines Folienverpackungsbeutels mit einem von einer Beutelwand gebildeten Beutelkörper, wobei eine erste Oberfläche der Beutelwand von einer transparenten Außenfolie und eine zweite Oberfläche der Beutelwand von einer nicht perforierten Innenfolie gebildet sind.

Vor diesem Hintergrund liegt der vorliegenden Erfindung die Aufgabe zugrunde, ein Verfahren zur Wiederverwertung von Kunststoff eines Folienverpackungsbeutels anzugeben, welches leicht durchzuführen ist, eine weitgehende Trennung ermöglicht und dennoch gute Funktionseigenschaften des Folienverpackungsbeutels ermöglicht.

Gegenstand der Erfindung und Lösung der Aufgabe ist ein Verfahren gemäß Patentanspruch 1.

Erfindungsgemäß wird bei dem Verfahren ein in seiner Konstruktion speziell angepasster Folienverpackungsbeutel zugeführt. Demnach ist erfindungsgemäß vorgesehen, dass die Innenfolie und die Außenfolie an ersten Beutelwandabschnitten nicht miteinander verbunden und an zweiten Beutelwandabschnitten miteinander verbunden sind, wobei sich die ersten Beutelwandabschnitte über zumindest 30 %, vorzugsweise zumindest 50 % besonders bevorzugt zumindest 70 % der Fläche der Beutelwand erstrecken.

Erfindungsgemäß wird damit ein Folienverpackungsbeutel bereitgestellt, der eine in der Schichtfolge der Beutelwand geschützt innenliegend angeordnete Druckschicht aufweist, wobei insbesondere dort, wo die Druckschicht vorgesehen ist, die Außenfolie ohne eine Verbindung auf der Innenfolie liegt. Die innenliegend geschützte Druckschicht ist durch die transparente Außenfolie sichtbar. Als transparent wird im Zusammenhang der Erfindung vor diesem Hintergrund ein Material bezeichnet, durch welches die Druckschicht gut sichtbar ist. Entsprechend ist im Rahmen der Erfindung nicht ausgeschlossen, dass die Außenfolie eine leichte Eintrübung und/oder Einfärbung aufweist, solange die Druckschicht gut sichtbar bleibt.

Wie nachfolgend erläutert, können zwischen der Außenfolie und der Innenfolie auch eine andere Materialschicht vorgesehen sein, wobei selbst dann in Richtung der Dicke der Beutelwand die Außenfolie und die Innenfolie auch nicht mittelbar über zwischenliegende Schichten verbunden sind.

Wenn der Folienverpackungsbeutel nach seiner Benutzung für eine Wiederverwendung bzw. ein Recycling in Partikel geschnitten oder gehäckselt wird, trennen sich an den ersten Beutelwandabschnitten die von der Außenfolie gebildeten Partikel von den Partikeln der Innenfolie.

Im Rahmen der Erfindung ergeben sich unterschiedliche Möglichkeiten für die Anordnung der Druckschicht. So ist es möglich, dass die Druckschicht hinsichtlich der Schichtfolge zwischen der Außenfolie und der Innenfolie angeordnet, jedoch auf die innenliegende Seite der transparenten Außenfolie in einem Konterdruck oder die innenliegende Seite der Innenfolie aufgebracht ist.

Bei einem Zerkleinern des Folienverpackungsbeutels liegt dann der Aufdruck an den jeweiligen Partikeln frei und kann leicht gelöst werden. Insbesondere ist gemäß der vorliegenden Erfindung vorzugsweise eine wasserlösliche Druckfarbe für die Druckschicht vorgesehen, so dass dann die freigelegte Druckfarbe abgewaschen werden kann. Geeignet sind beispielsweise Druckfarben mit einem Bindemittel auf der Basis von Polyvinylalkohol (PVOH).

Wenn die Druckschicht wie beschrieben in der Beutelwand innenliegend auf die Innenfolie oder die Außenfolie aufgebracht ist, kann die Beutelwand ausschließlich aus der Außenfolie und der Innenfolie gebildet sein, so dass die beiden Folien an den ersten Beutelwandabschnitten lose übereinander liegen.

Ausgehend von einer solchen Ausgestaltung ergeben sich verschiedene Variationsmöglichkeiten. Grundsätzlich können beispielsweise die Innenfolie und die Außenfolie aus verschiedenen Materialien gebildet sein. Wie bei einem üblichen Kaschierverbund können beispielsweise die Innenfolie aus einem Polyolefin, insbesondere Polyethylen und die Außenfolie aus Polyethylenterephthalat (PET) gebildet sein. Wenn ein solcher Folienverpackungsbeutel dann geschreddert bzw. in kleine Partikel geschnitten wird, bilden sich aus der Innenfolie einerseits und der Außenfolie andererseits jeweils sortenreine Partikel, welche aus Polyolefin bzw. Polyethylenterephthalat bestehen, wobei dann eine Auftrennung in einem Trenntank erfolgen kann, in dem das Polyolefin mit einer Dichte von weniger als 1 g/cm³ aufschwimmt und Polyethylenterephthalat absinkt.

Grundsätzlich ist es aber auch möglich, dass die Innenfolie und die Außenfolie aus dem gleichen Material, beispielsweise einem Polyolefin, insbesondere Polyethylen gebildet sind. Gegenüber herkömmlichen einschichtigen oder mehrschichtig laminierten Folienverpackungsbeuteln aus Polyethylen ergibt sich im Rahmen der Erfindung der Vorteil, dass die Druckschicht innenliegend angeordnet und dadurch optimal geschützt ist. Es kann deshalb auch, wie zuvor beschrieben, ohne Weiteres eine wasserlösliche Druckfarbe eingesetzt werden, weil die Druckschicht zunächst durch die transparente Außenfolie aber auch durch die nicht perforierte Innenfolie vollkommen eingeschlossen ist. Bei einem Recyceln kann dann die Druckfarbe leicht von den Partikeln abgewaschen werden, so dass dann ein besonders reines Recyclingmaterial resultiert. In diesem Zusammenhang ist auch zu berücksichtigen, dass Reste von Druckfarbe aufgrund der üblichen Inhaltsstoffe die Recyclingfähigkeit erheblich einschränken können.

Gemäß einer alternativen Ausgestaltung der Erfindung ist zwischen der Außenfolie und der Innenfolie ein Kernmaterial eingelegt, welches mit der Druckschicht versehen ist. Auch das Kernmaterial ist gemäß einer bevorzugten Weiterbildung an den ersten Beutelwandabschnitten nicht mit der Außenfolie und der Innenfolie verbunden, wobei das Kernmaterial jedoch dicht, das heißt nach außen und nach innen luft- und wasserdicht zwischen der Innenfolie und der Außenfolie angeordnet ist. Alternativ ist es auch möglich, dass das Kernmaterial lösbar mit der Außenfolie und/oder der Innenfolie verbunden ist, damit das Kernmaterial während des Herstellungsprozesses nicht verrutscht und eine verbesserte Festigkeit erreicht werden kann. Beispielsweise kann das Kernmaterial an punkt- oder linienförmigen Verbindungen mit einem wasserlöslichen Klebstoff an der Außenfolie und/oder der Innenfolie befestigt sein.

Insbesondere kann vorgesehen sein, dass das Kernmaterial lediglich an den ersten Beutelwandabschnitten vorgesehen ist und von den zweiten Beutelwandabschnitten rahmenförmig umgeben ist. Bei dem Kernmaterial handelt es sich um einen Schichtstoff, insbesondere Papier oder eine weitere Kunststofffolie.

Zweckmäßigerweise wird das Kernmaterial so ausgewählt, dass es leicht von der Innenfolie und/oder der Außenfolie getrennt werden kann. Insbesondere kann das Kernmaterial einerseits eine erste Dichte sowie die Außenfolie und/ oder die Innenfolie andererseits eine zweite Dichte aufweisen, wobei eine der Dichten größer und die andere Dichte kleiner als 1 g/cm³ ist.

Mit anderen Worten ist das Kernmaterial dann so ausgewählt, dass es in einem einfachen, mit Wasser gefüllten Trenntank nach einem Zerkleinern von den Partikeln der Außenfolie und/oder der Innenfolie getrennt werden kann. Für die Außenfolie und/oder die Innenfolie kann beispielsweise von einem Polyolefin mit einer Dichte kleiner 1 g/cm³ gebildet sein, während das Kernmaterial dann eine Dichte größer 1 g/cm³ aufweist. Geeignet sind beispielsweise Polymere mit einer Dichte größer 1 g/cm³ wie Polyethylenterephthalat.

Des Weiteren kommt als Kernmaterial auch Papier in Betracht, welches eine vergleichsweise große Dichte aufweist. Um eine Dichte von Papier von größer 1 g/cm³ zu erreichen, kann dieses beispielsweise mit mineralischen Füllstoffen versehen werden.

Durch Füllstoffe ist es schließlich auch möglich, Polyolefine mit einer Dichte von größer als 1 g/cm³ zu bilden, obwohl ungefüllte Polyolefine stets eine Dichte kleiner 1 g/cm³ aufweisen.

Es ist auch möglich, dass das Kernmaterial als Barriereschicht vorgesehen ist. In diesem Fall erstreckt sich das Kernmaterial vorzugsweise bis zu einem von den zweiten Beutelwandabschnitten gebildeten, an den Beutelrändern verlaufenden Rahmen, so dass dann nur dort eine erhöhte Diffusion auftreten kann. Als Barrierematerialien sind beispielsweise Polyamid und EVOH geeignet, wobei die nach Anforderungen eine Barrierefunktion gegenüber Sauerstoff, Wasserdampf und/oder niedrigmolekulare Kunststoff-Bestandteile vorgesehen sein kann.

Wenn im Rahmen der Erfindung eine Trennung in einem Trenntank vorgesehen ist, kommen selbstverständlich unterschiedliche Kombinationsmöglichkeiten in Betracht. Insbesondere ist es auch möglich, dass die Innenschicht und die Außenschicht eine Dichte größer 1 g/cm³ aufweisen, während das Kernmaterial eine Dichte von kleiner als 1 g/cm³ aufweist (z. B. PET/PE/PET).

Auch wenn gemäß der beschriebenen Variante zwischen der Innenfolie und der Außenfolie ein Kernmaterial vorgesehen ist, kann die Druckschicht mit einer wasserlöslichen Farbe gebildet sein. Alternativ kann auch vorgesehen werden, dass die Druckfarbe auf dem Kernmaterial verbleibt und dann nicht in dem Wasser des Trenntanks angereichert wird. Eine solche Ausführung kann gerade bei dünnen Schichten des Kernmaterials zweckmäßig sein, für die sich eine Verwertung nicht lohnt oder bei deren weiterer Verwertung Farbrückstände hingenommen werden können. Bei einem Kernmaterial aus Papier kann dieses nachfolgend dem üblichen Recyclingverfahren für Altpapier zugeführt werden.

Wenn, wie zuvor beschrieben, die Auftrennung verschiedener Materialkomponenten in einem Trenntank vorgesehen ist, muss gewährleistet werden, dass eine Fraktion aufschwimmt und die andere Fraktion absinkt. Zusätzlich ist es möglich in einem mit Wasser befüllten Trenntank die Schwelle für ein Aufschwimmen und Absinken in einem gewissen Maße, beispielsweise durch Salze, zu verschieben. In vielen Fällen kann aber mit Wasser ohne besondere Zusatzstoffe gearbeitet werden, weil für die Fertigung von Folienverpackungsbeuteln im ausreichenden Maße Kunststoffe und Papier mit einer Dichte über 1 g/cm³ und unter 1 g/cm³ vorliegen.

Bei einem Trenntank ergibt sich der Vorteil, dass die Trennschärfe an sich sehr hoch ist, so dass bereits kleine Abweichungen von der Dichte des Wassers bzw. der im Tank enthaltenen Flüssigkeit für eine Auftrennung ausreichend sind. Um eine schnelle Verfahrensführung zu ermöglichen, kann aber gemäß einer bevorzugten Ausgestaltung der Erfindung vorgesehen sein, dass bei sämtlichen zu trennenden Materialien der Dichteunterschied zu Wasser zumindest 0,02 g/cm³, insbesondere 0,05 g/cm³ beträgt. Diese Vorgaben werden sowohl von dem üblichen Polyolefin wie Polyethylen und Polypropylen als auch von Polyethylenterephthalat im Hinblick auf Wasser erfüllt. Wie bereits zuvor erläutert, kann in dem Trenntank auch eine Flüssigkeit enthalten sein, welche eine von 1 g/cm³ abweichende Dichte aufweist. Neben mit Salzen versetztem Wasser kommen grundsätzlich auch beliebige andere Flüssigkeiten und Flüssigkeitsmischungen in Betracht.

Erfindungsgemäß ist ein Zerkleinern des Folienbeutels vorgesehen, wobei an den nicht miteinander verbundenen ersten Beutelwandabschnitten aus der Außenfolie und der Innenfolie voneinander getrennte Partikel gebildet werden, wobei nachfolgend zumindest eine erste sortenreine Fraktion von Partikeln erzeugt wird, welche einer Wiederverwertung zugeführt wird.

Neben dem Einsatz eines Trenntanks kommen auch andere Ausgestaltungen des Verfahrens in Betracht. Beispielsweise können die bei dem Zerkleinern gebildeten Partikel auch mit Hilfe von Infrarotstrahlung in die erste sortenreine Fraktion und zumindest eine zweite, vorzugsweise ebenfalls sortenreine Fraktion von Partikeln getrennt werden. So ist es beispielsweise bekannt, mittels Infrarotstrahlung verschiedene Kunststoffe zu erkennen und dann mit einem gezielten Luftstrahl, Weichen oder dergleichen zu separieren.

Die ersten Beutelwandabschnitte ermöglichen eine stoffliche Trennung der Kunststoffmaterialien sowie - bei einer wasserlöslichen Druckfarbe - ein Auswaschen der Druckfarbe bei einem Recycling. Entsprechend soll der Flächenanteil der ersten Beutelwandabschnitte möglichst groß gewählt werden und beträgt im Rahmen der Erfindung zumindest 30 %, vorzugsweise zumindest 50 %, besonders bevorzugt zumindest 70 %. Die zweiten Beutelrandabschnitte sind jedoch notwendig, um die Außenfolie und die Innenfolie überhaupt miteinander zu verbinden und der Beutelwand die gewünschte Struktur zu verleihen.

Vor diesem Hintergrund bilden die zweiten Beutelwandabschnitte vorzugsweise Längs- und Quernähte. Insbesondere kann vorgesehen sein, dass die ersten Beutelwandabschnitte Seitenflächen eines Beutelkörpers bilden, die an Seitenkanten des Beutelkörpers durch den zweiten Beutelwandabschnitt verbunden sind.

Wenn beispielsweise der Folienverpackungsbeutel eine einfache Kissenform mit zwei gegenüberliegenden Frontwänden aufweist, bilden die zweiten Beutelwandabschnitte vorzugsweise einen umlaufenden Rahmen am Rand der beiden Frontwände, wobei die von einem solchen Rahmen eingeschlossenen Flächen die ersten Beutelwandabschnitte bilden.

Auch bei komplexeren Beutelformen wie Seitenfaltenbeuteln können die ersten Beutelwandabschnitte die Seitenflächen des Beutelkörpers, also die Frontwände und die Seitenfalten, bilden, die dann an den vier Seitenkanten des Beutelkörpers durch die zweiten Beutelwandabschnitte verbunden sind.

Im Rahmen der Erfindung kann vorgesehen sein, dass an den einzelnen Flächen des Beutelkörpers die Innenfolie und die Außenfolie lediglich an randseitigen Längs- und Quernähten verbunden sind. Je nach Material können solche Längs- und Quernähte durch einen nur dort aufgetragenen Kaschierklebstoff oder auch durch ein Versiegeln erzeugt sein.

Alternativ können auch innerhalb von randseitigen, rahmenförmigen Verbindungen zwischen der Innenfolie und der Außenfolie weitere partielle, insbesondere punktförmige Verbindungen vorliegen, um die Beweglichkeit der beiden Folien gegeneinander zu begrenzen. Des Weiteren können zu der Versteifung sowohl bei einer Ausgestaltung mit als auch einer Ausgestaltung ohne einem Kernmaterial Längs- und Quernähte an den Wandflächen vorgesehen sein, welche dort beispielsweise ein Gitter bilden. Bei einer dauerhaften Verbindung durch einen unlösbaren Kaschierkleber oder eine Versiegelung ist jedoch darauf zu achten, dass innerhalb einer solchen Gitterstruktur die ersten Beutelwandabschnitte mit einer ausreichenden Größe verbleiben, um nachfolgend ein effektives Recycling zu ermöglichen. Verbindungslinien oder -punkte können des Weiteren auch mit einem wasserlöslichen Klebstoff erzeugt werden, der bei einer Wiederverwertung in einem Wasserbad gelöst wird.

Es ist auch zu berücksichtigen, dass an den dauerhaft durch einen unlöslichen Klebstoff oder eine Versiegelung miteinander verbundenen Bereichen bei unterschiedlichen Materialien eine stoffliche Trennung nicht mehr möglich ist. Selbst wenn die Innenfolie und die Außenfolie aus dem gleichen Material gebildet sind, kann dann an einer solchen zusätzlichen Verbindungsstelle die Druckschicht nicht ohne weiteres abgewaschen werden, selbst wenn diese aus einer wasserlöslichen Druckfarbe besteht. Alternativ könnte eine solche zusätzliche Verbindungsstelle von der Druckschicht ausgespart sein.

Damit die einzelnen Bestandteile gut wiederverwertet werden können, ist es zweckmäßig, die Außenfolie und die Innenfolie jeweils sortenrein zu fertigen, wozu insbesondere auch Monofolien eingesetzt werden können. Für eine sortenreine Herstellung kann lediglich ein Rohstoff eingesetzt werden, der mit den üblichen Hilfs- und Füllstoffen versehen wird, deren Anteil üblicherweise weniger als 20 Gew.-% beträgt. Während die Außenfolie transparent ist, weist die Innenfolie zweckmäßigerweise Farbpigmente, insbesondere Weißpigment auf. Eine solche Ausgestaltung ist insbesondere dann zweckmäßig, wenn kein zusätzliches Kernmaterial vorhanden ist und die Innenfolie somit den Hintergrund für die durch die transparente Außenfolie sichtbare Druckschicht bildet.

Eine zur Herstellung einer Vielzahl von Folienverpackungsbeuteln geeignete Folienverbundbahn weist eine von einer transparenten Außenfolie gebildete erste Oberfläche und eine von einer nicht perforierten Innenfolie gebildete zweite Oberfläche auf, wobei zwischen der Außenfolie und der Innenfolie eine durch die transparente Außenfolie sichtbare Druckschicht angeordnet ist.

Die Innenfolie und die Außenfolie sind an sich über zumindest 50 % der Folienverbundbahn erstreckenden Verbundbahnflächen nicht miteinander verbunden und an zweiten Verbundbahnflächen, welche sich in einer Längsrichtung der Folienverbundbahn an zumindest einer Seite der ersten Verbundbahnfläche erstrecken, miteinander verbunden, wobei die ersten Verbundbahnflächen jeweils eine quadratische Fläche von mehr als 10 cm² aufweisen.

Die Folienverbundbahn kann als eine Endlosbahn gebildet werden, wobei dann nachfolgend eine Vielzahl von Folienverpackungsbeuteln aus Abschnitten der Folienverbundbahn erzeugt werden. Beispielsweise können von der vorgefertigten Folienverbundbahn einzelne Abschnitte abgetrennt werden, aus den dann jeweils ein Folienverpackungsbeutel gefertigt wird. Alternativ kann auch zunächst ein Schlauch aus der Folienverbundbahn geformt werden, aus dem dann - gegebenenfalls auch direkt im Zusammenhang mit einem Befüllvorgang - Beutel abgetrennt werden.

Wenn die Beutelwand lediglich von der Innenfolie und der Außenfolie gebildet wird, muss bei der Herstellung der Folienverbundbahn lediglich beachtet werden, dass die Verbindung durch einen Kaschierkleber oder gegebenenfalls auch durch ein Heißsiegeln nur in genau vorgegebenen Bereichen erfolgt. Ein solches Verbindungsmuster ist dann auf einen zuvor auf die Innenfolie oder die Außenfolie aufgebrachten Aufdruck rapportgenau abzustimmen.

Wenn zwischen der Innenfolie und der Außenfolie ein Kernmaterial angeordnet wird, muss sichergestellt werden, dass trotz des eingelegten Kernmaterials eine Verbindung der Innenfolie und der Außenfolie möglich ist.

Eine Verbindung kann im Rahmen der Erfindung auf unterschiedliche Weise erfolgen. So kann das Kernmaterial beispielsweise in Form von einzelnen Bögen zugeführt werden, wobei dann die Innenfolie und die Außenfolie eine größere Breite als diese Bögen senkrecht zu einer Produktionsrichtung aufweisen, so dass die Außenfolie und die Innenfolie an Längsnähten seitlich der Kernschicht verbunden werden können. Die Innenfolie und die Außenfolie können ohne Einschränkung separat zugeführt oder durch Falten einer einzigen Folienbahn gebildet werden.

Wenn das Kernmaterial in Form von Bögen zugeführt wird, können auch zwischen den aufeinander folgenden Bögen Quernähte erzeugt werden, an denen die Außenfolie und die Innenfolie direkt miteinander verbunden sind.

Um eine leichtere Herstellung zu ermöglichen, kann gemäß einer alternativen Ausgestaltung das Kernmaterial auch als Bahn zugeführt werden, wobei dann Quernähte durch die Bahn hindurch erzeugt werden müssen. Eine direkte Verbindung der Außenfolie und der Innenfolie ist beispielsweise möglich, wenn die Bahn des Kernmaterials in Querrichtung eine Perforation aufweist, wobei dann an den Öffnungen der Perforation eine direkte Verbindung der Außenfolie mit der Innenfolie durch Klebstoff und/oder eine Heißsiegelnaht möglich ist.

Als weitere Option kommt in Betracht, dass das Material der Kernschicht bei einem geeigneten Verbindungsprozess verdrängt wird. Schließlich ist es auch möglich, dass die Innenfolie und die Außenfolie jeweils an gegenüberliegenden Seiten jeweils mit dem Kernmaterial verbunden werden, so dass dann eine Verbindung der Außenfolie mit der Innenfolie über das dazwischen angeordnete Kernmaterial erfolgt. Bei einer Klebstoffkaschierung muss dann der Klebstoff auf beiden Seiten des Kernmaterials angeordnet werden.

Wenn die Innenfolie und die Außenfolie wie beschrieben durch Klebstoff oder auch Heißsiegeln über das Kernmaterial verbunden werden, können sämtliche zugeführte Materialbahnen auch eine gleiche Breite aufweisen. Allerdings ist dann in Kauf zu nehmen, dass nach einem Zerkleinern des Folienverpackungsbeutels für ein Recycling die so miteinander verbundenen Abschnitte nicht effizient abgetrennt und wiederverwertet werden können.

Die Erfindung wird im Folgenden anhand einer lediglich ein Ausführungsbeispiel darstellenden Zeichnung erläutert. Es zeigen:
- Fig. 1: einen Folienverpackungsbeutel in einer Perspektive,
- Fig. 2: eine für die Durchführung des erfindungsgemäßen Verfahrens geeignete Ausgestaltung des Folienverpackungsbeutels in einem Horizontalschnitt,
- Fig. 3: eine alternative Ausgestaltung des Folienverpackungsbeutels in einer Ansicht gemäß der Fig. 2,
- Fig. 4: Verfahrensschritte zur Herstellung einer Folienverbundbahn,
- Fig. 5: eine alternative Ausgestaltung des Verfahrens zur Herstellung einer Folienverbundbahn,
- Fig. 6: eine schematische Darstellung des erfindungsgemäßen Verfahrens,
- Fig. 7: ein zur Durchführung des Verfahrens vorgesehener Trenntank.

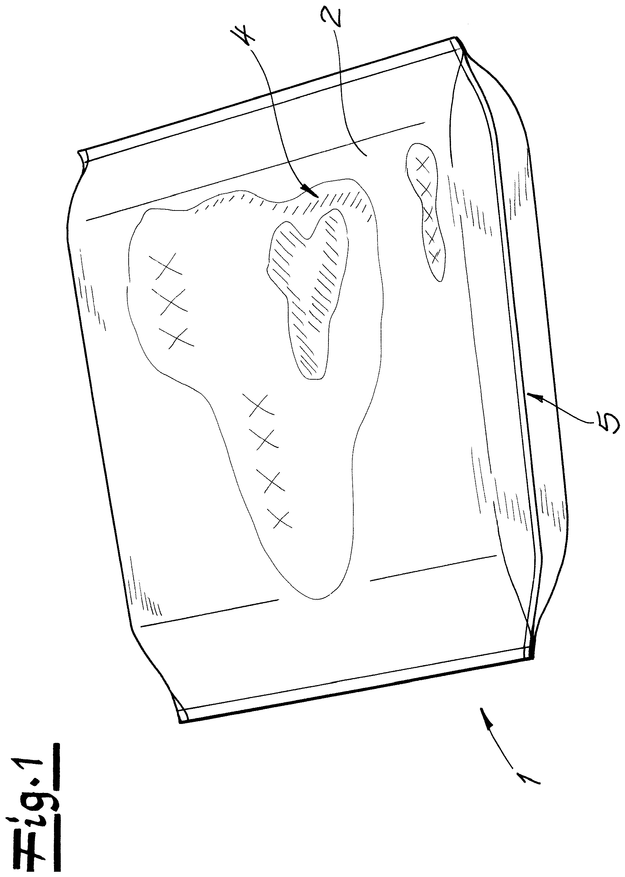

Die Fig. 1 zeigt einen Folienverpackungsbeutel mit einer üblichen Kissenform. Der Folienverpackungsbeutel weist einen luftdicht verschlossenen Beutelkörper 1 auf, der von einer Beutelwand gebildet ist. Wie nachfolgend im Detail dargestellt, ist eine erste, außenliegende Oberfläche der Beutelwand von einer transparenten Außenfolie 2 und eine zweite an dem Beutelkörper 1 innenliegende Oberfläche der Beutelwand von einer nicht perforierten Innenfolie 3 gebildet, wobei zwischen der Außenfolie 2 und der Innenfolie 3 eine durch die transparente Außenfolie 2 sichtbare Druckschicht 4 angeordnet ist.

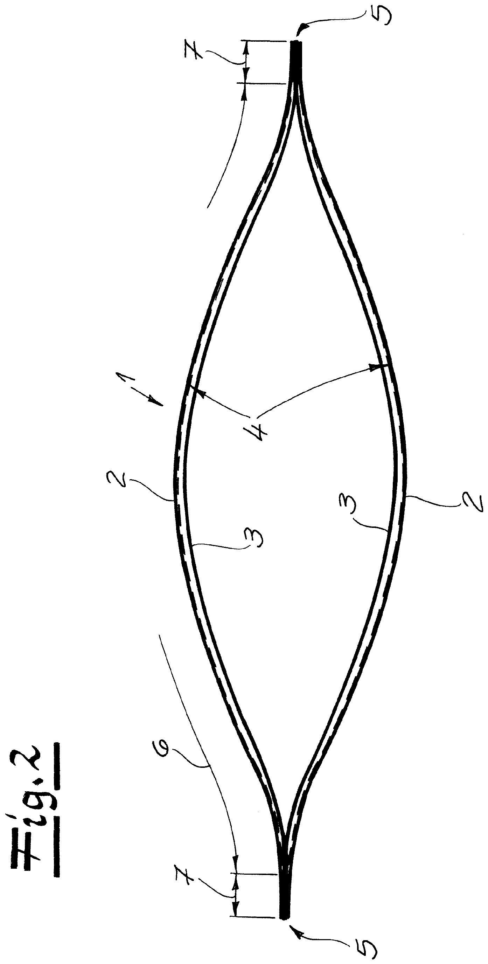

In der Fig. 2 ist zu erkennen, dass die Druckschicht 4 in an sich bekannter Weise innenliegend an der Beutelwand des Beutelkörpers 1 angeordnet ist. In dem dargestellten Ausführungsbeispiel ist die Druckschicht 4 auf die innenliegende Seite der Außenfolie 2 aufgebracht, so dass die Druckschicht 4 durch die Außenfolie 2 nach außen optimal geschützt ist.

Des Weiteren ist in der Fig. 2 zu erkennen, dass die Außenfolie 2 und die Innenfolie 3 nur an den Seitenkanten 5 des Beutelkörpers 1 miteinander verbunden sind. Der Beutelkörper 1 weist demnach an den beiden Frontwänden jeweils einen zusammenhängenden ersten Beutelwandabschnitt 6 auf, an dem die Innenfolie und die Außenfolie 2 nicht miteinander verbunden sind. Die an den Seitenkanten 5 des Beutelkörpers 1 verlaufenden Ränder bilden dagegen zweite Beutelwandabschnitte 7, an denen die Außenfolie 2 und die Innenfolie miteinander verbunden sind. Da die Innenfolie 3 nicht perforiert ist und die zweiten Beutelwandabschnitte 7 einen geschlossenen Rahmen bilden, ist auch die Druckschicht 4 innerhalb der Beutelwand dicht und damit geschützt gegen Umwelteinflüsse angeordnet.

Die Druckschicht 4 ist damit nicht nur gegen einen Abrieb, sondern auch gegen Feuchtigkeit und andere Substanzen geschützt, welche sich innerhalb oder außerhalb des Beutelkörpers 1 befinden. Die Druckschicht 4 kann deshalb auch ohne weiteres aus einer wasserlöslichen Druckfarbe gebildet sein. Die Innenfolie 3 ist üblicherweise eingefärbt, insbesondere mit einem Weißbatch versehen, weil diese den Hintergrund für die Druckschicht 4 bildet.

Die Ausgestaltung gemäß der Fig. 2 zeichnet sich durch eine besonders gute Wiederverwertbarkeit nach einem Zerkleinern des Folienverpackungsbeutels aus, wenn der Beutelkörper 1 in kleine Partikel Pₐ, Pᵢ gehäckselt oder geschnitten wird, so dass dann zumindest an den ersten Beutelwandabschnitten 6 die Außenfolie 2 von der Innenfolie 3 getrennt wird. Selbst wenn die Außenfolie 2 und die Innenfolie 3 aus dem gleichen Material sind, ergibt sich der Vorteil, dass die Druckschicht 4 freigelegt wird und ausgewaschen werden kann.

Vorzugsweise ist die Druckschicht 4 von einer wasserlöslichen Druckfarbe gebildet, wozu beispielsweise ein Bindemittel auf der Basis von PVOH vorgesehen sein kann. Es wird dann ein besonders reines Material erzielt, welches nicht durch Druckfarbe verunreinigt ist.

Alternativ können für die Außenfolie 2 und die Innenfolie 3 auch unterschiedliche Materialien vorgesehen sein, die dann bei einem Recycling voneinander getrennt werden können, weil zumindest an den ersten Beutelwandabschnitten jeweils sortenreine Partikel Pₐ, Pᵢ gebildet werden können. Wenn eine Aufteilung in einem Trenntank mit Wasser erfolgen soll, sind die Materialien für die Außenfolie und die Innenfolie so auszuwählen, dass eine Stofffraktion aufschwimmt, während die andere Stofffraktion absinkt. So weisen typische Polyolefine eine Dichte von weniger als 1 g/cm³ auf, während insbesondere Polyethylenterephthalat als übliches Material für Folienverpackungsbeutel eine Dichte von größer als 1 g/cm³ aufweist.

Wenn die Außenfolie 2 und die Innenfolie 3 aus unterschiedlichen Materialien gebildet sind, ist jedoch zu berücksichtigen, dass nach einem Zerkleinern die verbundenen zweiten Beutelwandabschnitte nicht ohne weiteres recycelt werden können und gegebenenfalls noch separat abgetrennt werden müssen.

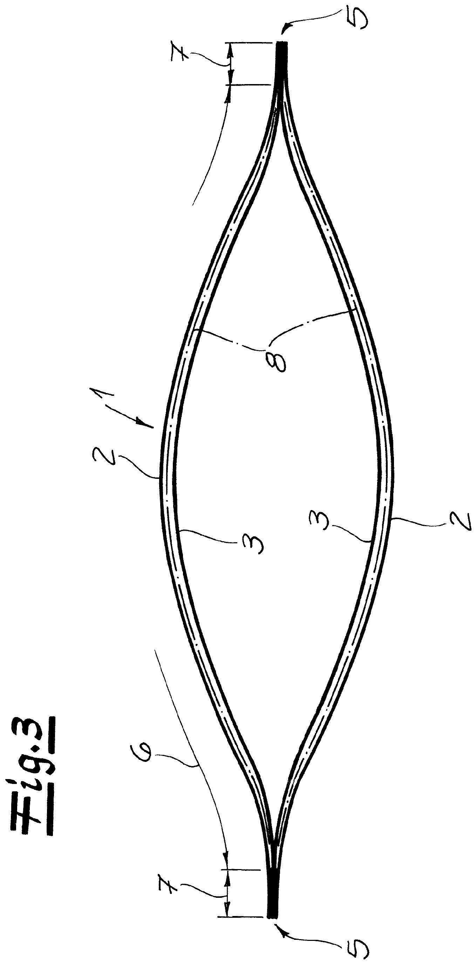

Die Fig. 3 zeigt eine alternative Ausgestaltung, bei der zwischen der Außenfolie 2 und der Innenfolie 3 ein Kernmaterial 8 angeordnet ist. Bei dem Kernmaterial 8 handelt es sich auch um ein Schichtmaterial, vorzugsweise um eine Kunststofffolie oder Papier. Das Kernmaterial 8 ist bevorzugt ausschließlich an den ersten Beutelwandabschnitten 6 vorgesehen, an denen die Außenfolie 2 und die Innenfolie 3 nicht miteinander und auch nicht mit dem zusätzlichen Kernmaterial 8 verbunden sind. Nach einem Zerschneiden des Beutelkörpers 1 für ein Recycling liegen wiederum einzelne sortenreine Partikel vor. Insbesondere kann vorgesehen sein, dass das Kernmaterial 8 eine erste Dichte und die Außenfolie 2 sowie die Innenfolie 3 eine zweite Dichte aufweisen, wobei eine der Dichten größer und die andere Dichte kleiner als 1 g/cm³ ist. Das Kernmaterial 8 kann dann nach einem Zerschneiden oder Schreddern des Beutelkörpers in einem einfachen Trenntank von dem Material der Außenfolie 2 und der Innenfolie 3 getrennt werden, wobei die Außenfolie 2 und die Innenfolie 3 dann vorzugsweise aus dem gleichen Material gebildet sind. Geeignet sind beispielsweise Schichtfolgen PE/PET/PE, PP/PET/PP, PET/PE/PET, PET/PP/PET.

Als Kernmaterial 8 kommt des Weiteren auch Papier in Betracht. Insbesondere sind auch Papiertypen mit Dichten größer oder kleiner 1 g/cm³ verfügbar, wobei eine Dichte größer als 1 g/cm³ durch anorganische Füllstoffe erreicht werden kann. Papier kann also sowohl als schwere Komponente in Kombination mit Polyolefinen oder auch als leichte Komponente in Kombination mit PET vorgesehen sein.

Wenn die Außenfolie 2 und die Innenfolie 3 aus dem gleichen Material gebildet und das Kernmaterial auch nicht mit der Außenfolie 2 oder der Innenfolie 3 abschnittsweise verbunden ist, kann im Rahmen der Erfindung eine vollständige sortenreine Wiederverwertung erfolgen.

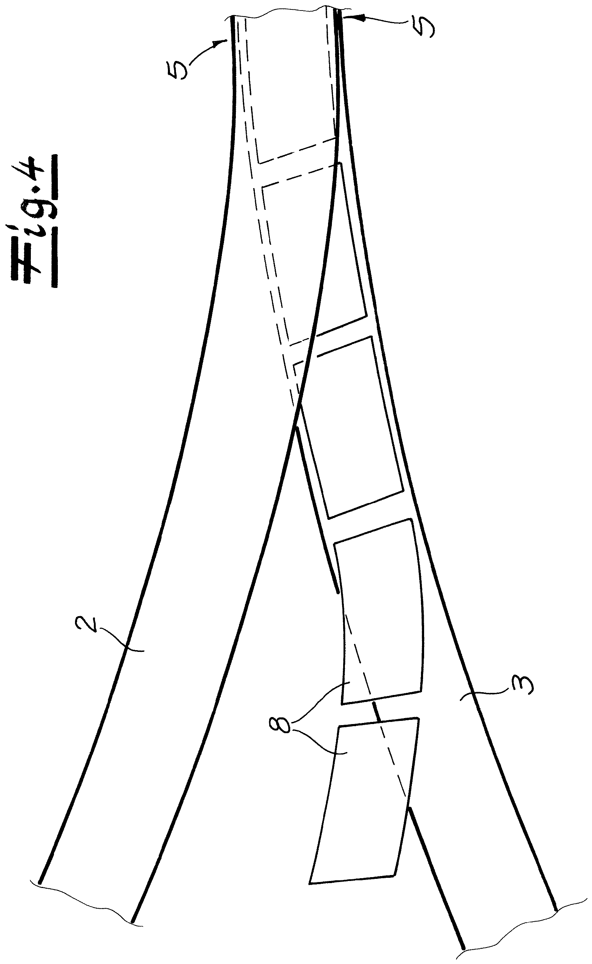

Die Fig. 4 zeigt exemplarisch Verfahrensschritte zur Bildung einer Folienverbundbahn für die Herstellung des beschriebenen Folienverpackungsbeutels, wobei die Außenfolie 2 und die Innenfolie 3 von separaten Rollen zugeführt werden und das Kernmaterial 8 in Form von einzelnen Bögen eingefügt wird. Da das Kernmaterial 8 in Form von einzelnen Bögen zugeführt wird, können zwischen der Außenfolie 2 und der Innenfolie 3 rahmenförmige Verbindungen vorgesehen werden, welche dann später die zweiten Beutelwandabschnitte 7 bilden. Im einfachsten Fall kann dann der in Fig. 3 dargestellte Beutelkörper aus zwei Lagen der in Fig. 4 dargestellten Verbundbahn hergestellt werden. Darüber hinaus kann ein Beutelkörper 1 auch durch Falten der Folienverbundbahn erzeugt werden, so dass dann die Verbindung der Außenfolie 2 und der Innenfolie 3 an den zweiten Beutelwandabschnitten lediglich an einer der Seitenkanten 5 oder auch an einer auf den Frontwänden verlaufenden Verbindungsnaht angeordnet ist.

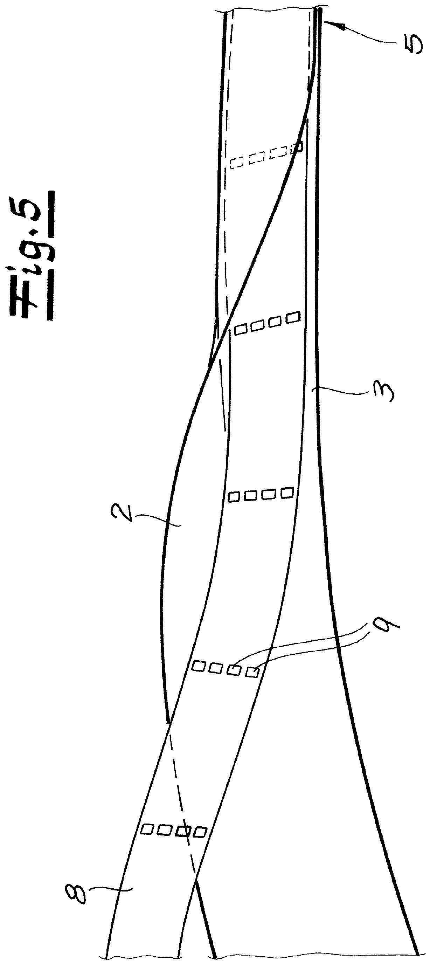

Zwei voneinander nicht abhängige Variationen des Herstellungsverfahrens sind in der Fig. 5 dargestellt. Zunächst ist ersichtlich, dass die Außenfolie 2 und die Innenfolie 3 des Beutelkörpers auch gemeinsam durch Falten aus einer einzigen Folienbahn gebildet werden können. Darüber hinaus ist auch dargestellt, dass das Kernmaterial 8 als durchgehender Strang bereitgestellt wird, wobei dann durch eine Perforation 9 in dem Kernmaterial 8 die Außenfolie 2 und die Innenfolie 3 direkt miteinander verbunden werden können.

Die Dicke der Außenfolie 2, der Innenfolie 3 sowie des Kernmaterials 8 liegt jeweils typischerweise zwischen 10µm und 150 µm, insbesondere zwischen 20 µm und 100 µm, wobei gerade durch die Auswahl eines geeigneten Kernmaterials 8 die mechanischen Eigenschaften des Folienverpackungsbeutels eingestellt werden können.

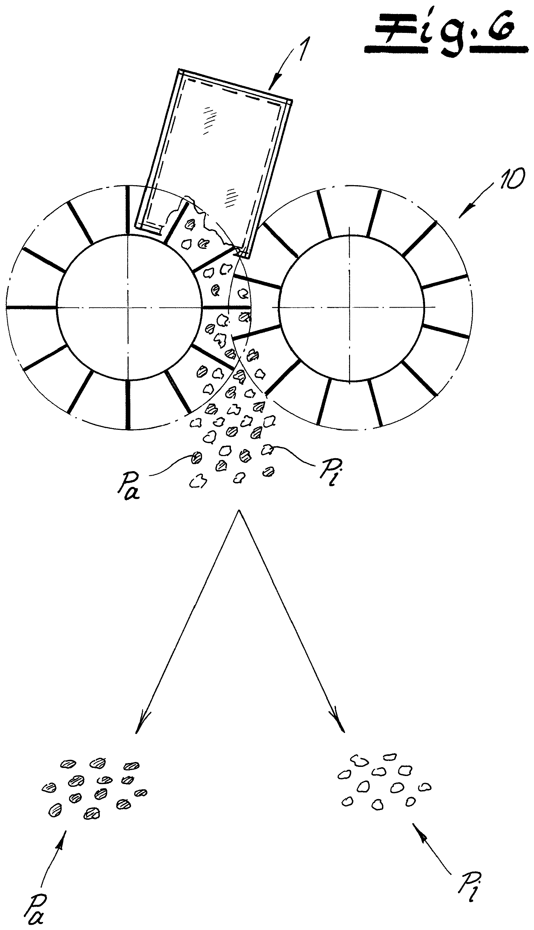

In der Fig. 6 ist das erfindungsgemäße Verfahren rein schematisch dargestellt. Demnach wird der Folienverpackungsbeutel mit einer geeigneten Zerkleinerungsvorrichtung zerkleinert, wobei zumindest an den nicht miteinander verbundenen ersten Beutelwandabschnitten 6 aus der Außenfolie 2 und der Innenfolie 3 voneinander getrennte Partikel Pₐ, Pᵢ gebildet werden, wobei dann durch eine Trennvorrichtung zumindest eine erste sortenreine Fraktion von Partikeln Pₐ, Pᵢ gebildet wird, welche einer Wiederverwertung zugeführt wird.

In dem Ausführungsbeispiel der Fig. 6 ist dargestellt, dass sowohl für die aus der Außenfolie 2 gebildeten Partikel Pₐ sowie die aus der Innenfolie 3 gebildeten Partikel Pᵢ jeweils sortenreine Fraktionen erzeugt werden.

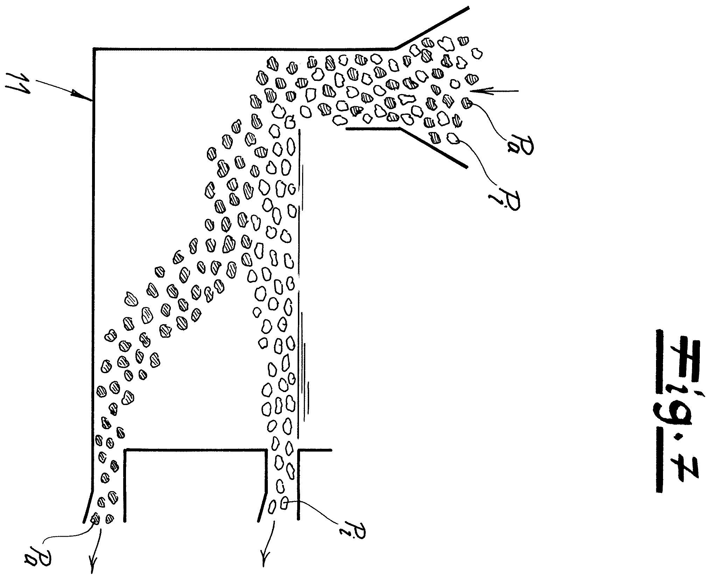

In der Fig. 7 ist exemplarisch dargestellt, dass für die sortenreine Trennung als Trennvorrichtung ein Trenntank 11 eingesetzt werden kann. Während eine erste Fraktion der Partikel Pᵢ aufschwimmt, gehen andere Partikel Pₐ in der Flüssigkeit unter, so dass eine Trennung erreicht wird. Die Zuordnung in dem dargestellten Ausführungsbeispiel zu der Innenfolie 3 und der Außenfolie 2 ist rein exemplarisch. Selbstverständlich können auch weitere Partikel, beispielsweise eines Kernmaterials 8 in der beschriebenen Weise aufgetrennt werden.

## Patentansprüche

1. Verfahren zur Wiederverwertung von Kunststoff, umfassend die Schritte:
Bereitstellen eines Folienverpackungsbeutel mit einem von einer Beutelwand gebildeten Beutelkörper (1), wobei eine erste Oberfläche der Beutelwand von einer transparenten Außenfolie (2) und eine zweite Oberfläche der Beutelwand von einer nicht perforierten Innenfolie (3) gebildet sind, wobei zwischen der Außenfolie (2) und der Innenfolie (3) eine durch die transparente Außenfolie (2) sichtbare Druckschicht (4) angeordnet ist, wobei die Innenfolie (3) und die Außenfolie (2) an ersten Beutelwandabschnitten (6) nicht miteinander verbunden und an zweiten Beutelwandabschnitten (7) miteinander verbunden sind und wobei sich die ersten Beutelwandabschnitte (6) über zumindest 30 % der Fläche der Beutelwand erstrecken;
Zerkleinern des Folienverpackungsbeutels, wobei an den nicht miteinander verbundenen ersten Beutelwandabschnitten aus der Außenfolie und der Innenfolie voneinander getrennte Partikel (Pᵢ, Pₐ) gebildet werden;
Bilden von zumindest einer ersten sortenreinen Fraktion von Partikeln (Pᵢ, Pₐ), welche einer Wiederverwertung geführt werden.

2. Verfahren nach Anspruch 1, wobei die bei dem Zerkleinern gebildeten Partikel (Pᵢ, Pₐ) in einem Trenntank in die erste sortenreine Fraktion und zumindest eine zweite, vorzugsweise ebenfalls sortenreine Fraktion getrennt werden.

3. Verfahren nach Anspruch 1 oder 2, wobei ein Folienverpackungsbeutel zugeführt wird, bei welchem die ersten Beutelwandabschnitte (6) jeweils eine quadratische Fläche von mehr als 10 cm² einschließen.

4. Verfahren nach einem der Ansprüche 1 bis 3, wobei ein Folienverpackungsbeutel zugeführt wird, bei welchem die Außenfolie (2) und die Innenfolie (3) jeweils sortenrein, vorzugsweise als Monofolie, gebildet sind.

5. Verfahren nach einem der Ansprüche 1 bis 4, wobei ein Folienverpackungsbeutel zugeführt wird, bei welchem die Druckschicht (4) aus wasserlöslicher Druckfarbe gebildet und vorzugsweise in der Beutelwand innenliegend auf die transparente Außenfolie (2) aufgebracht ist.

6. Verfahren nach Anspruch 5, wobei die wasserlösliche Druckfarbe nach dem Zerkleinern von den zugeordneten Partikeln abgewaschen wird.

## Claims

1. Method for recycling plastic, comprising the steps:
providing a film packaging bag with a bag body (1) formed by a bag wall, wherein a first surface of the bag wall is formed by a transparent outer film (2) and a second surface of the bag wall is formed by a non-perforated inner film (3), wherein a printed layer (4) visible through the transparent outer film (2) is arranged between the outer film (2) and the inner film (3), wherein the inner film (3) and the outer film (2) are not connected to one another at first bag wall sections (6) and are connected to one another at second bag wall sections (7) and wherein the first bag wall sections (6) extend over at least 30% of the area of the bag wall;
comminuting the film packaging bag, wherein particles (Pᵢ, Pₐ) separated from one another are formed from the outer film and the inner film at the first bag wall sections not connected to one another;
forming at least a first single-type fraction of particles (Pᵢ, Pₐ) which are supplied to recycling.

2. The method according to claim 1, wherein the particles (Pᵢ, Pₐ) formed during the comminuting are separated in a separating tank into the first single-type fraction and at least a second, preferably also single-type fraction.

3. The method according to claim 1 or 2, wherein a film packaging bag is supplied in which the first bag wall sections (6) each enclose a square area of more than 10 cm².

4. The method according to any one of claims 1 to 3, wherein a film packaging bag is supplied in which the outer film (2) and the inner film (3) are each formed as single-type, preferably as a monofilm.

5. The method according to any one of claims 1 to 4, wherein a film packaging bag is supplied in which the printed layer (4) is formed from water-soluble printing ink and is preferably applied to the transparent outer film (2) internally in the bag wall.

6. The method according to claim 5, wherein the water-soluble printing ink is washed out after comminution of the associated particles.

## Revendications

1. Procédé de recyclage de matière plastique, comprenant les étapes :
de la mise à disposition d'un sachet d'emballage en film avec un corps de sachet (1) formé par une paroi de sachet, une première surface de la paroi de sachet étant formée par un film extérieur (2) transparent et une deuxième surface de la paroi de sachet étant formée par un film intérieur (3) non perforé, entre le film extérieur (2) et le film intérieur (3) étant placée une couche d'impression (4) visible à travers le film extérieur (2) transparent, sur des premières parties (6) de paroi de sachet, le film intérieur (3) et le film extérieur (2) n'étant pas reliés l'un à l'autre et sur des deuxièmes parties (7) de paroi de sachet étant reliés l'un à l'autre et les premières parties (6) de paroi de sachet s'étendant sur au moins 30 % de la surface de la paroi de sachet ;
du broyage du sachet d'emballage en film, sur les premières parties de paroi de sachet non reliées ensemble, des particules séparées (Pᵢ, Pₐ) les unes des autres étant formées à partir du film extérieur et du film intérieur ;
de la création d'au moins une première fraction de particules (Pᵢ, Pₐ) de variété unique, lesquelles sont amenées à un recyclage.

2. Procédé selon la revendication 1, les particules (Pᵢ, Pₐ) créées lors du broyage étant séparées dans un réservoir de séparation dans la première fraction de variété unique et dans au moins une deuxième fraction, de préférence également de variété unique.

3. Procédé selon la revendication 1 ou 2, un sachet d'emballage en film étant alimenté pour lequel les premières parties (6) de paroi de sachet incluent chacune une surface quadratique de plus de 10 cm².

4. Procédé selon l'une quelconque des revendications 1 à 3, un sachet d'emballage en film étant alimenté pour lequel le film extérieur (2) et le film intérieur (3), chacun de variété unique sont conçus de préférence en tant que monofilm.

5. Procédé selon l'une quelconque des revendications 1 à 4, un sachet d'emballage en film étant alimenté pour lequel la couche d'impression (4) est formée d'encre d'imprimerie hydrosoluble et est appliquée de préférence dans la paroi de sachet, sur l'intérieur du film extérieur (2) transparent.

6. Procédé selon la revendication 5, après le broyage, l'encre d'imprimerie hydrosoluble étant éliminée par lavage des particules associées.
